# EUROPÄISCHE PATENTANMELDUNG

(11) **EP 4 671 698 A1**
(43) Veröffentlichungstag der Anmeldung: **31.12.2025**
(21) Anmeldenummer: 25182553.5
(22) Anmeldetag: 13.06.2025
(51) Int. Cl.: G01D 21/00, B65G 43/00

(54) **MEHRSCHICHTVERBUNDARTIKEL MIT SENSOREINRICHTUNG**

(30) Priorität: 26.06.2024 DE 102024205984
(71) Anmelder: ContiTech Deutschland GmbH, 30175 Hannover (DE)
(72) Erfinder: Schröder, André, 34346 Hann. Münden (DE); Wolfer, Tim, 30419 Hannover (DE)
(74) Vertreter: Preusser, Andrea

(57) **Zusammenfassung**

Die Erfindung betrifft einen Mehrschichtverbundartikel (10a, 10b), insbesondere Schlauch (10a), Luftfeder, Riemen oder Fördergurt (10b), enthaltend einen elastomeren Werkstoff und vorzugsweise einen Festigkeitsträger (11a, 11b), aufweisend eine Sensoreinrichtung (20) mit einem Sensor (21) und einem Sender (22), wobei die Sensoreinrichtung (20) eingerichtet ist, mittels des Sensors (21) Messdaten mindestens einer physikalischen Eigenschaft des Mehrschichtverbundartikels (10a, 10b) eines auf den Mehrschichtverbundartikel (10a, 10b) wirkenden Stoffes zu erfassen und mittels des Senders (22) auszusenden. Es wird vorgeschlagen, den Sender (22) mit einem Leuchtmittel (23) zu versehen, das die erfassten Messdaten als optisches Signal aussendet.

## Beschreibung

Die vorliegende Erfindung betrifft einen insbesondere als Schlauch, Luftfeder, Riemen oder Fördergurt ausgebildeten Mehrschichtverbundartikel mit den Merkmalen des Anspruchs 1. Gegenstand der Erfindung sind ebenfalls eine Messvorrichtung mit den Merkmalen des Anspruchs 4 sowie ein Verfahren mit den Merkmalen des Anspruchs 7.

Es hat sich für einige Anwendungsfälle als vorteilhaft erwiesen, Mehrschichtverbundartikel wie Schläuche, Luftfedern, (Antriebs-)Riemen oder Förderbänder mit Sensoren auszustatten, die mindestens eine physikalische Eigenschaft des Artikels, wie beispielsweise eine Dehnung und/oder eine Temperatur des Artikels, aufzeichnen können. Aus der Auswertung dieser Messdaten können beispielsweise Rückschlüsse auf den Verschleißzustand des Artikels gezogen werden, so dass die Notwendigkeit einer Wartung rechtzeitig erkannt werden kann. Die Sensoren können aber auch dazu dienen, mindestens eine physikalische Eigenschaft eines auf den Artikel wirkenden Stoffes aufzeichnen zu können. Als auf den Artikel wirkender Stoff kommt etwa bei einem Schlauch ein durch den Schlauch fließendes Fluid in Betracht. Beispielsweise wird bei einem Fördergurt das geförderte Stück- oder Schüttgut als ein auf das Fördergurt wirkender Stoff betrachtet. Auf diese Weise können mit den Sensoren diverse Betriebsparameter, wie etwa eine Temperatur des Stoffes, überwacht und somit ein ordnungsgemäßer Betrieb sichergestellt werden.

Um eine präzise Messung zu begünstigen und um Beschädigungen an den Sensoren oder der Messelektronik zu vermeiden, können die Sensoreinrichtungen in den Artikel eingebettet werden. Beispielsweise bei mehrlagigen Artikeln kann eine Sensoreinrichtung in eine Schicht integriert oder zwischen zwei Schichten angeordnet sein, damit sie vor äußeren mechanischen oder witterungsbedingten Einflüssen geschützt sind. Eine technische Herausforderung bei derartig integrierten Sensoreinrichtungen ist die Übertragung der Messdaten aus dem Inneren des Artikels heraus z.B. an eine externe Auswerteeinrichtung. Eine direkte Drahtverbindung mit der Sensoreinrichtung ist ohne eine Beeinträchtigung der Integrität des Artikels nicht möglich, da elektrische Leitungen durch die um die Messelektronik liegenden Schichten hindurchgeführt werden müssen. An den Austrittsstellen der elektrischen Leitungen sind die Stärke und Festigkeit einzelner Schichten verringert, so dass sie Schwachstellen des Mehrschichtverbundartikels darstellen.

Die US 2023184354 A1 offenbart ein Sensorsystem, das in der Wandung eines Schlauches integriert ist. Das Auslesen der mit dem Sensor aufgenommenen Daten erfolgt über eine drahtlose Funkverbindung (RFID). Nachteilig an dieser Art der Datenübermittlung ist, dass bei komplexeren Systemen mit einer Vielzahl von Sensoreinrichtungen, wie beispielsweise einem Kühlungskreislauf mit zahlreichen Kühlmittelschläuchen, auch eine Vielzahl von Signalen empfangen werden, die nur schwer dem jeweiligen Sensor zugeordnet werden können. Überdies ist es für Unbefugte möglich, die Daten der RFID-Chips auszulesen, was unerwünscht ist.

Aufgabe der vorliegenden Erfindung ist es, einen Mehrschichtverbundartikel bereitzustellen, bei dem die mittels der integrierten Sensoreinrichtung aufgezeichneten Messdaten in einfacher Weise insbesondere an eine externe Auswertevorrichtung übertragen werden können, insbesondere wobei die Integrität des Artikels möglichst erhalten bleibt.

Diese Aufgabe wird durch einen Mehrschichtverbundartikel mit den Merkmalen des Anspruchs 1 gelöst. Bevorzugte Merkmale sind Gegenstand der abhängigen Ansprüche. Weitere Vorteile und Merkmale sind der allgemeinen Beschreibung sowie den Ausführungsbeispielen zu entnehmen. Gegenstand der vorliegenden Erfindung ist auch eine Messvorrichtung mit den Merkmalen des Anspruchs 4.

Der erfindungsgemäße Mehrschichtverbundartikel - insbesondere ein Schlauch, eine Luftfeder, ein Riemen oder ein Fördergurt - enthält einen elastomeren Werkstoff und vorzugsweise einen Festigkeitsträger. Der Mehrschichtverbundartikel weist eine erste Außenfläche und eine zweite Außenfläche auf. Der Mehrschichtverbundartikel weist ferner eine zwischen den Außenflächen angeordnete Sensoreinrichtung mit einem Sensor und einem Sender auf. Die Sensoreinrichtung ist eingerichtet, mittels des Sensors Messdaten mindestens einer physikalischen Eigenschaft des Mehrschichtverbundartikels oder mindestens einer physikalischen Eigenschaft eines auf den

Mehrschichtverbundartikel wirkenden Stoffes zu erfassen und mittels des Senders auszusenden. Der Sensor ist hierzu mit dem Sender signalübertragend verbunden (drahtlos oder drahtgebunden). Der Mehrschichtverbundartikel zeichnet sich dadurch aus, dass der Sender ein Leuchtmittel, insbesondere eine Leuchtdiode oder eine Laserdiode, aufweist und die Sensoreinrichtung eingerichtet ist, die erfassten Messdaten anhand des Leuchtmittels als optisches Signal auszusenden.

Die erfassten Messdaten stellen elektrische Signale dar, die über das Leuchtmittel in Lichtemissionen mit bestimmten Charakteristiken, d.h. ein optisches Signal umgewandelt werden. Das optische Signal kann aus dem Mehrschichtverbundartikel herausgesendet werden, ohne die Integrität des Artikels zu beeinträchtigen. Zudem kann das optische Signal lediglich an seiner Austrittsstelle aus dem Mehrschichtverbundartikel oder in einem geringen Abstand davon detektiert werden, weshalb im Gegensatz zu RFID-Sendern das Risiko eines Auslesens der Sensoreinrichtung durch Unbefugte stark verringert ist.

Das Emissionsspektrum des Leuchtmittels kann sich sowohl im sichtbaren als auch im unsichtbaren (UV oder Infrarot) Spektralbereich befinden. Der Sender kann ausgebildet sein, die Messdaten als optisches Signal entsprechend eines vordefinierten Kommunikationsprotokolls zu übertragen. Der Sender kann das optische Signal entsprechend dem Kommunikationsprotokoll kodieren und senden, so dass ein außerhalb des Mehrschichtverbundartikels angeordneter Empfänger das optische Signal empfangen und in ein elektrisches Signal dekodieren kann.

Die erste Außenfläche und die zweite Außenfläche verlaufen bei schlauch- und/oder luftfederartigen Mehrschichtverbundartikeln vorzugsweise koaxial zueinander. Bei riemen- und/oder gurtartigen Mehrschichtverbundartikeln verlaufen die erste Außenfläche und die zweite Außenfläche bevorzugt parallel zueinander.

Der Mehrschichtverbundartikel enthält einen elastomeren Werkstoff, d.h. der Mehrschichtverbundartikel enthält ein Elastomer, ein thermoplastisches Elastomer oder eine Kombination davon. Der Mehrschichtverbundartikel kann eine Schicht aus einem elastomeren Werkstoff aufweisen. Der Mehrschichtverbundartikel kann neben der einen Schicht aus elastomerem Werkstoff auch noch weitere Lagen und Schichten, auch aus unterschiedlichen polymeren Werkstoffen, aufweisen. Der Mehrschichtverbundartikel kann einen metallischen oder textilen Festigkeitsträger aufweisen. Der metallische oder textile Festigkeitsträger kann zwischen zwei Schichten des Mehrschichtverbundartikels angeordnet oder in eine oder mehrere der Schichten eingebettet sein.

In einer bevorzugten Ausgestaltung des erfindungsgemäßen Mehrschichtverbundartikels ist das Leuchtmittel und ggf. die gesamte Sensoreinrichtung von zumindest einer ersten Schichtanordnung, die zumindest eine erste Schicht aufweist, überdeckt, wobei die erste Schichtanordnung in einem Überdeckungsbereich des Leuchtmittels zumindest teilweise transparent für die von dem Leuchtmittel ausgesendete optische Strahlung ausgebildet ist. Die erste Schichtanordnung schützt das Leuchtmittel und gegebenenfalls die gesamte Sensoreinrichtung vor äußeren Einflüssen. Die erste Schichtanordnung kann dabei im Überdeckungsbereich vollständig transparent oder auch transluzent ausgebildet sein.

In einer weiteren bevorzugten Ausgestaltung des erfindungsgemäßen Mehrschichtverbundartikels sind das Leuchtmittel und der Sensor auf einer gemeinsamen Trägerschicht angeordnet, die mit einer ersten Seite an einer der Schichten des Mehrschichtverbundartikels anliegt. Auf diese Weise wird ein kompakter und geschützter Aufbau realisiert. Bevorzugt enthält die Trägerschicht ein dielektrisches Material. Beispielsweise ist die Trägerschicht als flexible Leiterplatte ausgebildet.

Die Sensoreinrichtung kann einen Energiespeicher aufweisen oder mit einem Energiespeicher verbindbar ausgebildet sein, der die für die Funktionalität der Sensoreinrichtung erforderliche elektrische Energie bereitstellt. Beispielsweise kann die Sensoreinrichtung eine Antenneneinrichtung aufweisen, die Energie von einem externen Lesegerät empfangen kann. Die Antenneneinrichtung kann (beispielsweise nach Art eines passiven RFID-Transponders) ein Funksignal empfangen und elektrische Energie daraus generieren, mit der die Sensoreinrichtung versorgt wird. Ferner kann die Sensoreinrichtung eine Spule aufweisen, über die Energie von einem externen Ladegerät induktiv auf den Energiespeicher übertragen werden kann.

Vorzugsweise weist die Sensoreinrichtung neben dem Sender auch einen Empfänger auf, wobei die Sensoreinrichtung eingerichtet ist, ein von einer externen Quelle, z.B. einem Prüfgerät, ausgesendetes optisches Signal zu empfangen. Der Empfänger kann hierzu einen Lichtdetektor, insbesondere eine Photodiode oder einen Fototransistor, aufweisen. Der Empfänger kann ausgebildet sein, die das empfangene optische Signal entsprechend eines vordefinierten Kommunikationsprotokolls zu dekodieren und in ein elektrisches Signal umzuwandeln. Auf diese Weise bilden Sender und Empfänger eine optische Schnittstelle, mit der eine bidirektionale optische Kommunikation möglich ist. Die Sensoreinrichtung kann einen Datenspeicher aufweisen. Über die bidirektionalen optische Kommunikation können im Datenspeicher gespeicherte Informationen (z.B. eine Seriennummer des Artikels, mit dem Sensor aufgezeichnete Messwerte, etc.) ausgelesen werden. Ferner lassen sich über die bidirektionale optische Kommunikation auch Informationen in den Datenspeicher schreiben (z.B. eine Seriennummer des Artikels, Herstellungsdatum, etc.).

Insbesondere weist die Sensoreinrichtung eine Auslöseeinrichtung auf, wobei die Sensoreinrichtung eingerichtet ist, die erfassten Messdaten anhand des Leuchtmittels als optisches Signal auszusenden, wenn die Auslöseeinrichtung betätigt wird. Die Auslöseeinrichtung kann eine Kommunikationsschnittstelle zum Empfangen eines funkbasierten Triggersignals aufweisen. Die Auslöseeinrichtung kann alternativ oder zusätzliche eine Kommunikationsschnittstelle zum Empfangen eines optischen Triggersignals aufweisen. Beispielsweise kann der Empfänger der Sensoreinrichtung die Kommunikationsschnittstelle zum Empfangen eines optischen Triggersignals ausbilden. Die Auslöseeinrichtung wird durch Empfangen des funkbasierten und/oder optischen Triggersignals betätigt und die Messdaten mittels des Senders ausgesendet. Das Triggersignal kann beispielsweise von einem entsprechenden manuellen oder stationären Lesegerät ausgesendet werden. Die Sensoreinrichtung kann ferner eingerichtet sein, dass das Aufzeichnen der Messdaten mittels des Sensors erst bei Betätigung der Auslöseeinrichtung getriggert wird.

Gemäß dem bereits vor- sowie dem weiter unten nachbeschriebenen wird die eingangs gestellte Aufgabe auch durch eine Messvorrichtung mit den Merkmalen des Anspruchs 4 gelöst.

Die erfindungsgemäße Messvorrichtung zum Erfassen mindestens einer physikalischen Eigenschaft eines Mehrschichtverbundartikels oder eines auf den Mehrschichtverbundartikel wirkenden Stoffes weist einen erfindungsgemäßen Mehrschichtverbundartikel auf. Ferner weist die Messvorrichtung einen Empfänger auf, der dazu eingerichtet ist, die von dem Leuchtmittel als optisches Signal ausgesendeten Messdaten zu empfangen und in ein entsprechendes elektrisches Signal umzuwandeln. Der Empfänger kann hierzu einen Lichtdetektor, insbesondere eine Photodiode oder einen Fototransistor, aufweisen. Vorzugsweise ist der Empfänger an dem Mehrschichtverbundartikel, insbesondere von außen an der ersten Schichtanordnung befestigt.

In einer bevorzugten Ausgestaltung der erfindungsgemäßen Messvorrichtung weist diese eine Auswertevorrichtung auf, die eingerichtet ist, die von dem Empfänger in ein elektrisches Signal umgewandelten Messdaten zu empfangen.

Gemäß dem bereits vor- sowie dem weiter unten nachbeschriebenen wird die eingangs gestellte Aufgabe auch durch ein Verfahren mit den Merkmalen des Anspruchs 7 gelöst.

Das erfindungsgemäße Verfahren zum Erfassen mindestens einer physikalischen Eigenschaft eines Mehrschichtverbundartikels oder mindestens einer physikalischen Eigenschaft eines auf den Mehrschichtverbundartikel wirkenden Stoffes, wobei der Mehrschichtverbundartikel einen elastomeren Werkstoff und vorzugsweise einen Festigkeitsträger enthält, weist folgende Schritte auf:
- Erfassen von Messdaten der physikalischen Eigenschaft mittels eines Sensors einer in dem Mehrschichtverbundartikel angeordneten Sensoreinrichtung;
- Aussenden der Messdaten mittels eines Senders der Sensoreinrichtung.

Das erfindungsgemäße Verfahren zeichnet sich dadurch aus, dass die Messdaten mittels des Senders als elektrisches Signal empfangen und mittels eines Leuchtmittels des Senders als optisches Signal ausgesendet werden.

In einer bevorzugten Ausgestaltung des erfindungsgemäßen Verfahrens weist das Verfahren auf:
- Umwandeln der als elektrisches Signal empfangenen Messdaten entsprechend eines vorbestimmten Kommunikationsprotokolls für optische Datenübertragung in ein optisches Signal mittels des Senders.

In einer weiteren bevorzugten Ausgestaltung des erfindungsgemäßen Verfahrens weist das Verfahren auf:
- Empfangen der von dem Leuchtmittel als optisches Signal ausgesendeten Messdaten mittels eines Empfängers.

In einer weiteren bevorzugten Ausgestaltung des erfindungsgemäßen Verfahrens weist das Verfahren auf:
- Umwandeln der als optisches Signal empfangenen Messdaten entsprechend eines vorbestimmten Kommunikationsprotokolls für optische Datenübertragung in ein elektrisches Signal mittels des Empfängers.

Bevorzugt wird der erfindungsgemäße Mehrschichtverbundartikel in dem Verfahren verwendet.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: ein Ausführungsbeispiel eines als Schlauch ausgebildeten erfindungsgemäßen Mehrschichtverbundartikels in einer Schnittdarstellung;
- Fig. 2: ein Ausführungsbeispiel einer erfindungsgemäßen Messvorrichtung mit einem als Schlauch ausgebildeten erfindungsgemäßen Mehrschichtverbundartikel in einer Schnittdarstellung;
- Fig. 3: ein Ausführungsbeispiel eines als Fördergurt oder Riemen ausgebildeten erfindungsgemäßen Mehrschichtverbundartikels in einer Schnittdarstellung;
- Fig. 4: ein Ablaufschema eines Ausführungsbeispiel eines erfindungsgemäßen Verfahrens.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

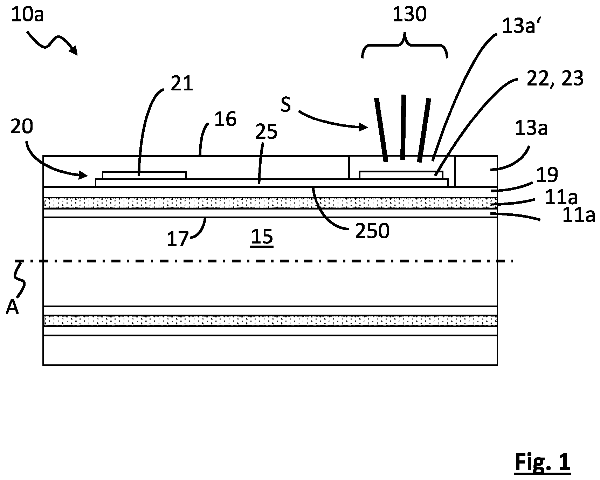

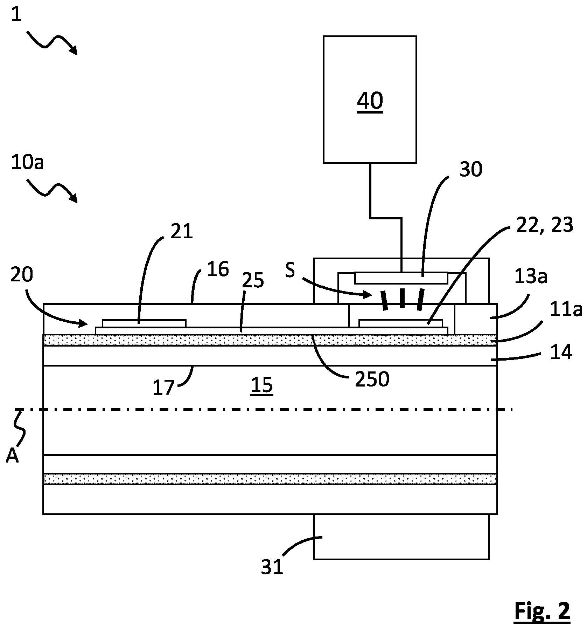

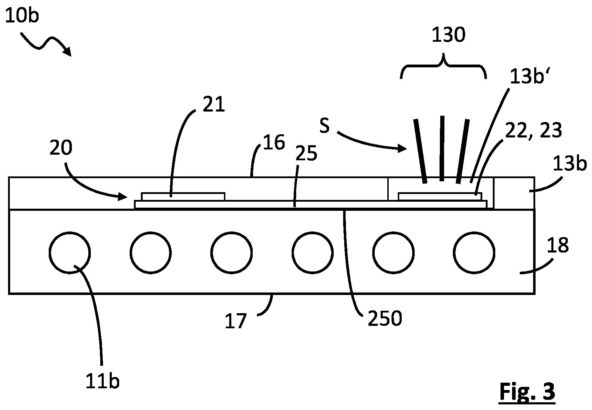

Figuren 1 bis 3 zeigen verschiedene Ausführungsbeispiele eines erfindungsgemäßen Mehrschichtverbundartikels 10a, 10b. In den Figuren 1 und 2 ist der Mehrschichtverbundartikel als Schlauch 10a ausgebildet, während in Fig. 3 ein Riemen oder Fördergurt 10b den Mehrschichtverbundartikel ausbildet. Der Mehrschichtverbundartikel 10a, 10b weist eine erste Außenfläche 16 und eine zweite Außenfläche 17 auf. Zwischen den Außenflächen 16, 17 ist eine Sensoreinrichtung 20 mit einem Sensor 21 und einem Sender 22 angeordnet. Die Sensoreinrichtung 20 ist eingerichtet, mittels des Sensors 21 Messdaten mindestens einer physikalischen Eigenschaft des Mehrschichtverbundartikels 10a, 10b oder mindestens einer physikalischen Eigenschaft eines auf den Mehrschichtverbundartikel 10a, 10b wirkenden Stoffes zu erfassen und mittels des Senders 22 auszusenden. Der Sender 22 weist ein Leuchtmittel 23 auf. Die Sensoreinrichtung 20 ist eingerichtet, die erfassten Messdaten anhand des Leuchtmittels 23 als optisches Signal S auszusenden. Sensor 21 und Sender 22 sind signalübertragend miteinander verbunden (nicht gezeigt).

Das Leuchtmittel 23 ist von zumindest einer ersten Schichtanordnung, die im vorliegenden Fall ausschließlich eine erste Schicht 13a, 13b aufweist, überdeckt. Die erste Schichtanordnung bildet die erste Außenfläche 16 aus. Die erste Schichtanordnung bildet eine Barriere für das Leuchtmittel 23 und die übrige Sensoreinrichtung 20 gegenüber einer äußeren Umgebung des Mehrschichtverbundartikels 10a, 10b. In einem Überdeckungsbereich 130 des Leuchtmittels 23 ist die erste Schichtanordnung zumindest teilweise transparent für die von dem Leuchtmittel 23 ausgesendete optische Strahlung ausgebildet. Die optische Strahlung kann sichtbar oder unsichtbar (Ultraviolettstrahlung oder Infrarotstrahlung) sein.

Das Leuchtmittel 23 und der Sensor 21 sind auf einer gemeinsamen Trägerschicht 25 angeordnet, die mit einer ersten Seite 250 an einer der Schichten 20, 16 des Mehrschichtverbundartikels 10a, 10b anliegt. Die erste Seite 250 der Trägerschicht 25 kann auch als Rückseite bezeichnet werden.

Die beiden Ausführungsbeispiele der Figuren 1 und 2 zeigen den Mehrschichtverbundartikel in Form eines Schlauches 10a. Die Schichten des Schlauches 10a erstrecken sich im Wesentlichen rotationssymmetrisch um eine Längsmittelachse A. Die erste Außenfläche 16 und die zweite Außenfläche 17 verlaufen somit koaxial. Der Schlauch 10a weist eine Innenschicht 14 aus einem polymeren, insbesondere elastomeren Material auf, die die zweite Außenfläche 17 ausbildet und auf diese Weise einen Fluidkanal 15 für ein Fluid definiert. Der Schlauch 10a weist ferner eine Schicht mit einem textilen oder metallischen Festigkeitsträger 11a auf. Der Festigkeitsträger 11a kann auch in eine polymere, insbesondere elastomere Matrix eingebettet sein. Zwischen der Schicht mit dem Festigkeitsträger 11a und der Trägerschicht 25 ist eine Zwischenschicht 20 aus einem polymeren, insbesondere elastomeren Material angeordnet, um die Sensoreinrichtung 20 von dem Festigkeitsträger 11a zu beabstanden und auf diese Weise Beschädigungen der Sensoreinrichtung 20 durch mechanische Belastungen vorzubeugen. Die Trägerschicht 25 enthält ein dielektrisches Material. Beispielsweise ist die Trägerschicht 25 eine flexible Leiterplatte. Auf der Trägerschicht 25 sind der Sensor 21 und der Sender 22 angeordnet. Auf der Schicht mit dem Festigkeitsträger 11a ist die erste Schicht 13a angeordnet, die auch als Außenschicht bezeichnet werden kann. Ein Abschnitt 13a' der ersten Schicht 13a, innerhalb dessen sich der Überdeckungsbereich 130 befindet, ist aus einem polymeren, insbesondere elastomeren Material ausgebildet, das zumindest teilweise transparent für die von dem Leuchtmittel 23 ausgesendete optische Strahlung ausgebildet ist. Anhand des Sensors 21 aufgezeichnete Messdaten einer physikalischen Eigenschaft des Schlauches 10a oder einer physikalischen Eigenschaft eines durch den Schlauch 10a geleiteten Fluids können mittels des Senders 22 bzw. des Leuchtmittels 23 als optisches Signal S in die äußere Umgebung des Schlauches 10a ausgesendet werden. Damit ist eine Signalübertragung realisierbar, ohne dass die Integrität des Schlauches 10a beeinträchtigt wird.

Fig. 2 zeigt ein Ausführungsbeispiel einer erfindungsgemäßen Messvorrichtung 1 mit einem als Schlauch 10a ausgebildeten Mehrschichtverbundartikel gemäß Fig. 1. Die Messvorrichtung weist einen Empfänger 30 auf, der dazu eingerichtet ist, die von dem Leuchtmittel 23 als optisches Signal S ausgesendeten Messdaten zu empfangen und in ein entsprechendes elektrisches Signal umzuwandeln. Der Empfänger 30 ist dabei mittels einer den Schlauch 10a umgreifenden Befestigungsvorrichtung 31 von außen an der ersten Schichtanordnung bzw. der ersten Schicht 13a befestigt. Die Messvorrichtung 1 weist ferner eine Auswertevorrichtung 40 auf, die eingerichtet ist, die von dem Empfänger 30 in ein elektrisches Signal umgewandelten Messdaten zu empfangen und auszuwerten. Auf diese Weise ist eine Erfassung und/oder Überwachung der physikalischen Eigenschaft realisierbar, ohne dass die Integrität des Schlauches 10a beeinträchtigt wird.

Das Ausführungsbeispiel der Fig. 3 zeigt den Mehrschichtverbundartikel in Form eines Fördergurts 10b (oder Riemens). Die Schichten des Fördergurts 10b erstrecken sich im Wesentlichen parallel zu einer quer zur Figurenebene verlaufenden Laufrichtung des Fördergurts 10b. Die erste Außenfläche 16 und die zweite Außenfläche 17 verlaufen somit ebenfalls parallel zueinander. Der Fördergurt 10b weist eine Basisschicht 18 aus einem polymeren, insbesondere elastomeren Material auf, in dem metallische Festigkeitsträger 11b eingebettet sind. Die Festigkeitsträger 11b erstrecken sich hierbei in Längs- bzw. Laufrichtung des Fördergurts 10b. Die Festigkeitsträger 11b enthalten insbesondere zumindest ein Metall (z.B. Stahldrähte), zumindest ein Polymer (z.B. Aramid), Kohlenstofffasern und/oder Glasfasern. Die Basisschicht 18 bildet die zweite Außenfläche 17 aus, die auch als Unterseite bezeichnet werden kann. Auf der Basisschicht 18 ist die Trägerschicht 25 angeordnet. Die Trägerschicht 25 enthält ein dielektrisches Material. Beispielsweise ist die Trägerschicht 25 eine flexible Leiterplatte. Auf der Trägerschicht 25 sind der Sensor 21 und der Sender 22 angeordnet. Auf der Basisschicht 18 ist die erste Schicht 13 b angeordnet, die auch als Deckschicht bezeichnet werden kann. Die Deckschicht bildet die erste Außenfläche 16 auf, die auch als Oberseite bezeichnet werden kann. Ein Abschnitt 13a' der ersten Schicht 13a, innerhalb dessen sich der Überdeckungsbereich 130 befindet, ist aus einem polymeren, insbesondere elastomeren Material ausgebildet, das zumindest teilweise transparent für die von dem Leuchtmittel 23 ausgesendete optische Strahlung ausgebildet ist. Anhand des Sensors 21 aufgezeichnete Messdaten einer physikalischen Eigenschaft des Fördergurts 10b oder einer physikalischen Eigenschaft eines auf dem Fördergurt 10b liegenden Stück- oder Schüttguts können mittels des Senders 22 bzw. des Leuchtmittels 23 als optisches Signal S in die äußere Umgebung des Fördergurts 10b ausgesendet werden. Damit ist eine Signalübertragung realisierbar, ohne dass die Integrität des Fördergurts 10b beeinträchtigt wird.

Grundsätzlich können der Sensor 21 und der Sender 22 in einer alternativen Ausführungsform in unterschiedlichen Schichten des Mehrschichtverbundartikels 10a, 10b angeordnet sein.

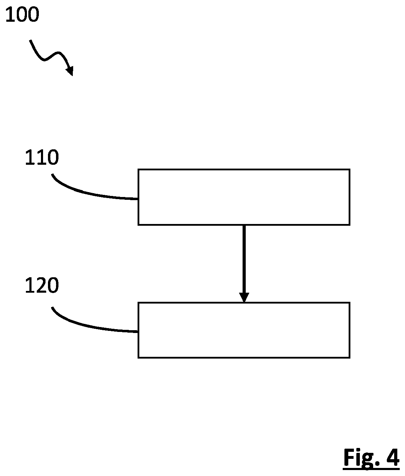

Fig. 4 zeigt ein Ablaufschema eines Ausführungsbeispiel eines erfindungsgemäßen Verfahrens 100, das bevorzugt unter Verwendung eines erfindungsgemäßen Mehrschichtverbundartikels 10a, 10b durchgeführt wird, wobei das Verfahren 100 folgende Schritte aufweist:
- Erfassen 110 von Messdaten der physikalischen Eigenschaft mittels eines Sensors 21 einer in dem Mehrschichtverbundartikel 10a, 10b angeordneten Sensoreinrichtung 20 und
- Aussenden 120 der Messdaten mittels eines Senders 22 der Sensoreinrichtung 20,
wobei die Messdaten mittels des Senders 22 als elektrisches Signal von dem Sensor 21 empfangen und mittels eines Leuchtmittels 23 des Senders 22 als optisches Signal S ausgesendet werden.

Ergänzend sei darauf hingewiesen, dass "aufweisend" keine anderen Elemente oder Schritte ausschließt und "ein" oder "eine" keine Vielzahl ausschließt.

Der Schutzbereich der vorliegenden Erfindung ist durch die Patentansprüche gegeben und wird durch die in der Beschreibung erläuterten oder den Figuren gezeigten Merkmale nicht beschränkt.

## Patentansprüche

1. Mehrschichtverbundartikel (10a, 10b), insbesondere Schlauch (10a), Luftfeder, Riemen oder Fördergurt (10b), enthaltend einen elastomeren Werkstoff und vorzugsweise einen Festigkeitsträger (11a, 11b), aufweisend
eine erste Außenfläche (16) und eine zweite Außenfläche (17),
eine zwischen den Außenflächen (16, 17) angeordnete Sensoreinrichtung (20) mit einem Sensor (21) und einem Sender (22), wobei die Sensoreinrichtung (20) eingerichtet ist, mittels des Sensors (21) Messdaten mindestens einer physikalischen Eigenschaft des Mehrschichtverbundartikels (10a, 10b) oder mindestens einer physikalischen Eigenschaft eines auf den Mehrschichtverbundartikel (10a, 10b) wirkenden Stoffes zu erfassen und mittels des Senders (22) auszusenden,
**dadurch gekennzeichnet, dass** der Sender (22) ein Leuchtmittel (23) aufweist, wobei die Sensoreinrichtung (20) eingerichtet ist, die erfassten Messdaten anhand des Leuchtmittels (23) als optisches Signal (S) auszusenden.

2. Mehrschichtverbundartikel (10a, 10b) nach Anspruch 1, wobei das Leuchtmittel (23) von zumindest einer ersten Schichtanordnung, die zumindest eine erste Schicht (13a, 13b) aufweist, überdeckt ist und die erste Schichtanordnung in einem Überdeckungsbereich (130) des Leuchtmittels (23) zumindest teilweise transparent für die von dem Leuchtmittel (23) ausgesendete optische Strahlung ausgebildet ist.

3. Mehrschichtverbundartikel (10a, 10b) nach Anspruch 1 oder 2, wobei das Leuchtmittel (23) und der Sensor (21) auf einer gemeinsamen Trägerschicht (25) angeordnet sind, die mit einer ersten Seite (250) an einer der Schichten (11a, 18) des Mehrschichtverbundartikels (10a, 10b) anliegt.

4. Messvorrichtung (1) zum Erfassen mindestens einer physikalischen Eigenschaft eines Mehrschichtverbundartikels (10a, 10b) oder eines auf den Mehrschichtverbundartikel (10a, 10b) wirkenden Stoffes, aufweisend:
- einen Mehrschichtverbundartikel (10a, 10b) nach einem der Ansprüche 1 bis 3,
- einen Empfänger (30), der dazu eingerichtet ist, die von dem Leuchtmittel (23) als optisches Signal (S) ausgesendeten Messdaten zu empfangen und in ein entsprechendes elektrisches Signal umzuwandeln.

5. Messvorrichtung (1) nach Anspruch 3, wobei der Empfänger (30) an dem Mehrschichtverbundartikel (10a, 10b), insbesondere von außen an der ersten Schichtanordnung befestigt ist.

6. Messvorrichtung (1) nach Anspruch 3 oder 4 mit einer Auswertevorrichtung (40), die eingerichtet ist, die von dem Empfänger (30) in ein elektrisches Signal umgewandelten Messdaten zu empfangen.

7. Verfahren (100) zum Erfassen mindestens einer physikalischen Eigenschaft eines Mehrschichtverbundartikels (10a, 10b) oder mindestens einer physikalischen Eigenschaft eines auf den Mehrschichtverbundartikel (10a, 10b) wirkenden Stoffes, wobei der Mehrschichtverbundartikel (10a, 10b) einen elastomeren Werkstoff und vorzugsweise einen Festigkeitsträger (11a, 11b) enthält, wobei das Verfahren (100) aufweist:
- Erfassen (110) von Messdaten der physikalischen Eigenschaft mittels eines Sensors (21) einer in dem Mehrschichtverbundartikel (10a, 10b) angeordneten Sensoreinrichtung (20);
- Aussenden (120) der Messdaten mittels eines Senders (22) der Sensoreinrichtung (20);
**dadurch gekennzeichnet, dass**
die Messdaten mittels des Senders (22) als elektrisches Signal empfangen und mittels eines Leuchtmittels (23) des Senders (22) als optisches Signal (S) ausgesendet werden.

8. Verfahren (100) nach Anspruch 7, wobei das Verfahren (100) aufweist:
- Umwandeln der als elektrisches Signal empfangenen Messdaten entsprechend eines vorbestimmten Kommunikationsprotokolls für optische Datenübertragung in ein optisches Signal (S) mittels des Senders (22).

9. Verfahren (100) nach Anspruch 7 oder 8, wobei das Verfahren (100) aufweist:
- Empfangen der von dem Leuchtmittel (23) als optisches Signal (S) ausgesendeten Messdaten mittels eines Empfängers (30); und
- (Optional) Umwandeln der als optisches Signal (S) empfangenen Messdaten entsprechend eines vorbestimmten Kommunikationsprotokolls für optische Datenübertragung in ein elektrisches Signal mittels des Empfängers (30).

10. Verfahren (100) nach Anspruch 7, wobei der Mehrschichtverbundartikel (10a, 10b) nach einem der Ansprüche 1 bis 3 ausgebildet ist.
